# EUROPÄISCHE PATENTSCHRIFT

(11) **EP 2 885 780 B1**
(45) Veröffentlichungstag und Bekanntmachung des Hinweises auf die Patenterteilung: **18.01.2017**
(21) Anmeldenummer: 13752885.7
(22) Anmeldetag: 15.08.2013
(51) Int. Cl.: G08G 1/16, H04J 3/06

(54) **VERFAHREN UND SYSTEM ZUM AUSGLEICHEN EINER ZEITABWEICHUNG IN EINEM FAHRZEUG-ZU-X-KOMMUNIKATIONSSYSTEM**
METHOD AND SYSTEM FOR COMPENSATING FOR A TIME DISCREPANCY
PROCÉDÉS ET SYSTÈME DESTINÉS À COMPENSER UN ÉCART DE TEMPS

(30) Priorität: 16.08.2012 DE 102012214555
(43) Veröffentlichungstag der Anmeldung: 24.06.2015
(73) Patentinhaber: Continental Teves AG & Co. oHG, 60488 Frankfurt (DE)
(72) Erfinder: STÄHLIN, Ulrich, 65760 Eschborn (DE)
(74) Vertreter: Wagner, Philipp
(86) Internationale Anmeldenummer: PCT/EP2013/067096
(87) Internationale Veröffentlichungsnummer: WO 2014/027072

(56) Entgegenhaltungen:
- WO-A1-2010/139807
- WO-A2-03/077086
- DE-A1-102009 045 748

## Beschreibung

Die Erfindung betrifft ein Verfahren zum Ausgleichen einer Zeitabweichung gemäß Oberbegriff von Anspruch 1 und ein System zum Ausgleichen einer Zeitabweichung gemäß Oberbegriff von Anspruch 10.

Aus dem Stand der Technik ist eine Vielzahl an unterschiedlichen Umfeldsensoren in Kraftfahrzeuganwendungen bekannt. Aufgrund der vielfältigen neuen Möglichkeiten, die derartige Sensorsysteme im Zusammenhang mit Fahrerassistenzsystemen bieten, gewinnen diese zunehmend an Verbreitung. Als Umfeldsensoren werden dabei z.B. Radarsensoren, Kamerasensoren und Lidarsensoren verwendet. Ebenso sind auch Navigationssysteme, welche in der Regel GPS-basiert ausgeführt sind, in immer mehr aktuellen Fahrzeugen bereits serienmäßig vorhanden. Diese Navigationssysteme nehmen anhand von empfangenen Satellitensignalen eine Standortbestimmung vor und führen den Fahrer entlang einer mithilfe einer digitalen Karte bestimmten Fahrtroute ans Ziel. Aktuell noch nicht serienreif hingegen sind die sog. Fahrzeug-zu-X-Kommunikationssysteme, deren flächendeckende Einführung zumindest für Neufahrzeuge jedoch für die kommenden Jahre bereits beschlossen wurde und die gegenwärtig noch Gegenstand von Standardisierungsbestrebungen sind. Diese Kommunikationssysteme kommunizieren dabei drahtlos und tauschen untereinander u.a. Daten über von Umfeld- und Fahrzeugsensoren erfasste Informationen aus.

In diesem Zusammenhang beschreibt die DE 10 2007 058 192 A1 ein zentrales Steuergerät für mehrere in einem Kraftfahrzeug vorgesehene Assistenzsysteme, die zumindest teilweise mit Umfeldsensoren ausgestattet sind, wobei gemäß der DE 10 2007 058 192 A1 auch ein Telematiksystem als Umfeldsensor verstanden wird. Das zentrale Steuergerät ist auf Datenebene mit den einzelnen Assistenzsystemen verbunden und plausibilisiert die Informationen einzelner Umfeldsensoren mittels der Informationen anderer Umfeldsensoren. Z.B. kann die Bildinformation einer Kamera die Abstandsmessung eines Radarsensors bestätigen. Einzelne Sensorinformationen können somit bestätigt werden und liegen redundant vor. Eine derartige Kopplung von Einzelsignalen verschiedener Sensoren ist auch als Sensorfusion bekannt.

Aus der DE 10 2008 061 304 A1 ist eine Fahrzeug-zu-X-Kommunikationseinrichtung für ein Fahrzeug zum drahtlosen Übertragen von fahrzeugrelevanten Daten bekannt. Diese Daten werden dabei an Umgebungsfahrzeuge oder an Infrastruktureinrichtungen übertragen. Die beschriebene Kommunikationseinrichtung umfasst zwei getrennte Kommunikationseinheiten, wobei die erste Kommunikationseinheit auf der Basis einer WLAN-Verbindung und die zweite Kommunikationseinheit auf Basis einer Remote Keyless Entry (RKE)-Verbindung ausgeführt ist.

Die DE 10 2009 045 748 A1 offenbart ein Verfahren und eine Vorrichtung zur Ermittlung des Status einer drahtlosen Fahrzeug-zu-X-Kommunikation eines Fahrzeugs zu seiner Umgebung. Dazu wird neben einer Bewertung der Übertragungsqualität von empfangenen Botschaften auch eine Aussage über die Quantität bzw. Qualität der Kommunikationsteilnehmer getroffen. Dies geschieht beispielsweise, indem bei der Analyse der Funkbotschaften die Laufzeit der Botschaft ermittelt wird. Zur Ermittlung dieser Laufzeit kann jede Funkbotschaft einen Zeitstempel aus einer gemeinsamen Zeitbasis über ihren Absendezeitpunkt aufweisen, wobei die gemeinsame Zeitbasis die Zeitbasis eines globalen Sattelitennavigationssystems, wie z.B. GPS oder Galileo, ist.

Die aus dem Stand der Technik bekannten Fahrzeug-zu-X-Kommunikationssysteme sind jedoch selbst bei Verwendung der Zeitbasis eines globalen Sattelitennavigationssystems als gemeinsame Zeitbasis insofern nachteilbehaftet, als dass die unterschiedlichen Sattelitennavigationsempfangsmodule herstellerabhängig unterschiedliche Verarbeitungsdauern und Verarbeitungsweisen der empfangenen Sattelitensignale aufweisen. Daher können auch zeitgleich gesendete Fahrzeug-zu-X-Botschaften mit unterschiedlichen Zeitstempeln gekennzeichnet werden. Beispielsweise kann ein und derselbe Zeitstempel sowohl denjenigen Zeitpunkt kennzeichnen, zu dem alle für einen Positonsbestimmungsschritt notwendigen Satelitensignale empfangen werden, als auch denjenigen Zeitpunkt, zu dem die Verarbeitung aller Satelitensignale abgeschlossen ist.

Dementsprechend kann die zeitliche Abweichung bei identischen Zeitstempeln typischerweise mehrere 100 ms betragen. Bei einer Fahrzeuggeschwindigkeit von etwa 100 km/h führt eine zeitliche Abweichung von 100 ms bereits zu einem Positionsfehler von 3 m, was insbesondere für sicherheitskritische Fahrzeuganwendungen nicht ausreichend ist.

Die Aufgabe der Erfindung ist es daher, ein Verfahren vorzuschlagen, das ein Ausgleichen von zeitlichen Abweichungen in den verschiedenen Fahrzeug-zu-X-Kommunikationssystemen ermöglicht.

Diese Aufgabe wird erfindungsgemäß durch das Verfahren zum Ausgleichen einer Zeitabweichung gemäß Anspruch 1 gelöst. Gemäß dem erfindungsgemäßen Verfahren zum Ausgleichen einer Zeitabweichung, bei welchem ein erstes und ein zweites Fahrzeug-zu-X-Kommunikationssystem auf eine externe Zeitbasis zurückgreifen, bestimmt das erste Fahrzeug-zu-X-Kommunikationssystem aus der externen Zeitbasis eine erste interne Zeitbasis und das zweite Fahrzeug-zu-X-Kommunikationssystem aus der externen Zeitbasis eine zweite interne Zeitbasis. Weiterhin sendet das erste Fahrzeug-zu-X-Kommunikationssystem Fahrzeug-zu-X-Daten und das zweite Fahrzeug-zu-X-Kommunikationssystem empfängt Fahrzeug-zu-X-Daten, wobei zu sendende Fahrzeug-zu-X-Daten mit einem aus der ersten internen Zeitbasis erstellten Zeitstempel gekennzeichnet werden und erfasste Umfeldsensordaten mit einem aus der zweiten internen Zeitbasis erstellten zweiten Zeitstempel gekennzeichnet werden. Das Verfahren zeichnet sich dadurch aus, dass mittels zeitlichen Abgleichens von erfassten Umfeldsensordaten mit den empfangenen Fahrzeug-zu-X-Daten die Zeitabweichung der ersten internen Zeitbasis von der zweiten internen Zeitbasis bestimmt wird und mittels eines Korrekturwerts ausgeglichen wird.

Durch zeitliches Abgleichen der Umfeldsensordaten mit den empfangenen Fahrzeug-zu-X-Daten können Ereignisse ermittelt werden, die sowohl in den Umfeldsensordaten als auch in den Fahrzeug-zu-X-Daten beschrieben sind, jedoch mit voneinander abweichenden Zeitstempeln gekennzeichnet sind. Ein Beispiel ist etwa das Ausführen einer Notbremsung eines dem eigenen Fahrzeug vorausfahrenden Fahrzeugs. Da die Umfeldsensordaten zeitlich ebenso wie das zweite Fahrzeug-zu-X-Kommunikationssystem der zweiten internen Zeitbasis unterliegen, wird durch das zeitliche Abgleichen der sowohl in den Umfeldsensordaten als auch in den mit dem aus der ersten internen Zeitbasis erstellten Zeitstempel gekennzeichneten Fahrzeug-zu-X-Daten beschriebenen Ereignisse eine mögliche Zeitabweichung der ersten internen Zeitbasis des ersten Fahrzeug-zu-X-Kommunikationssystems von der zweiten internen Zeitbasis des zweiten Fahrzeug-zu-X-Kommunikationssystems erkannt. Diese Zeitabweichung wird bestimmt und mittels eines der Zeitabweichung entsprechenden Korrekturwerts, welcher als Offset-Wert auf den Zeitstempel aufaddiert bzw. von diesem subtrahiert wird, ausgeglichen.

Der solcherart ermittelte Korrekturwert wird im Folgenden verwendet, um alle Fahrzeug-zu-X-Daten, welche vom ersten Fahrzeug-zu-X-Kommunikationssystem gesendet und vom zweiten Fahrzeug-zu-X-Kommunikationssystem empfangen werden, zeitlich an die zweite interne Zeitbasis des zweiten Fahrzeug-zu-X-Kommunikationssystems anzupassen. Dazu kann der ermittelte Korrekturwert im zweiten Fahrzeug-zu-X-Kommunikationssystem für eine bestimmte Zeitspanne, z.B. 5 Minuten, gespeichert werden.

Daraus ergibt sich der Vorteil, dass eine präzise zeitliche Einordnung der empfangenen Fahrzeug-zu-X-Daten und der von den Fahrzeug-zu-X-Daten beschriebenen Ereignisse ermöglicht wird, da das erfindungsgemäße Verfahren die Zeitabweichung mittels des Korrekturwerts ausgleicht. Auf Basis dieser präzisen zeitlichen Einordnung kann die Effektivität und Wirksamkeit zahlreicher Fahrerassistenzsysteme verbessert werden.

Das erste Fahrzeug-zu-X-Kommunikationssystem ist bevorzugt in einem ersten Kraftfahrzeug angeordnet und das zweite Fahrzeug-zu-X-Kommunikationssystem ist bevorzugt in einem zweiten Kraftfahrzeug angeordnet.

Weiterhin ist es bevorzugt, dass das erste und das zweite Fahrzeug-zu-X-Kommunikationssystem auf eine Zeitbasis eines globalen Navigationssattelitensystems als externe Zeitbasis zurückgreifen. Da serienmäßig bereits eine Vielzahl von Neufahrzeugen mit Positionsbestimmungsvorrichtungen eines globalen Navigationssattelitensystems, wie z.B. GPS, ausgestattet ist, verfügen diese Fahrzeuge somit ohne zusätzlichen Aufwand über die Möglichkeit, auf die Zeitbasis des GPS zurückzugreifen. Ein weiterer Vorteil ist darin zu sehen, dass die Zeitbasis eines globalen Navigationssattelitensystems vergleichsweise präzise ist.

Vorteilhafterweise ist es vorgesehen, dass für das Abgleichen eine mittels zeitlicher Interpolation und/oder Extrapolation der Umfeldsensordaten erstellte erste Datenkurve und/oder eine mittels zeitlicher Interpolation und/oder Extrapolation der empfangenen Fahrzeug-zu-X-Daten erstellte zweite Datenkurve herangezogen werden. In der Regel erfasst eine Umfeldsensorik die Umfeldsensordaten nicht kontinuierlich sondern getaktet, d.h., nur einmal pro Arbeitszyklus. Ebenso sendet das erste Fahrzeug-zu-X-Kommunikationssystem die Fahrzeug-zu-X-Daten in der Regel nur einmal pro Arbeitszyklus. Da die Arbeitszyklen des Fahrzeug-zu-X-Kommunikationssystems und der Umfeldsensorik jedoch in den meisten Fällen voneinander abweichend sind, kann durch die Interpolation bzw. Extrapolation der Umfeldsensordaten bzw. der Fahrzeug-zu-X-Daten dennoch eine scheinbare Kontinuität erzeugt werden. Durch Suchen von sowohl in den Umfeldsensordaten als auch in den empfangenen Fahrzeug-zu-X-Daten beschriebenen identischen Ereignissen und Vergleich der Zeitstempel kann somit die Zeitabweichung bestimmt werden. Eine zeitliche Interpolation findet z.B. in der Form statt, dass zwischen zwei mittels des Fahrzeug-zu-X-Kommunikationssystems empfangenen Positionsinformationen eines Umgebungsfahrzeugs eine Gerade gelegt wird, deren Verlauf mit großer Wahrscheinlichkeit der tatsächlichen Position des Umgebungsfahrzeugs während der Zeit zwischen dem Senden der zwei Positionsinformationen entspricht. Daraus ergibt sich der Vorteil, dass auch in den Fällen die Zeitabweichung bzw. der Korrekturwert bestimmt werden kann, in denen die Umfeldsensordaten aufgrund der getakteten Arbeitsweise der Umfeldsensorik mittels des zweiten Zeitstempels nur diskrete Zeitpunkte kennzeichnen, zu denen keine empfangenen Fahrzeug-zu-X-Daten vorliegen.

In einer weiteren bevorzugten Ausführungsform ist es vorgesehen, dass für das Abgleichen eine Geschwindigkeitsinformation aus erfassten Dopplereffektdaten eines Radarsensors und eine Geschwindigkeitsinformation aus empfangenen Fahrzeug-zu-X-Daten herangezogen werden. Die Bestimmung der Geschwindigkeitsinformation eines Umgebungsfahrzeugs aus erfassten Dopplereffektdaten eines Radarsensors ist vergleichsweise einfach und genau möglich. Da außerdem die Geschwindigkeitsinformation des Umgebungsfahrzeugs von diesem selbst problemlos erfasst und gesendet werden kann, ist die Geschwindigkeitsinformation besonders gut zur Bestimmung der Zeitabweichung und somit des Korrekturwerts geeignet.

Vorzugsweise zeichnet sich das Verfahren dadurch aus, dass für das Abgleichen eine Zustandsänderungsinformation einer Verkehrssignalanlage aus erfassten Bilddaten eines Kamerasensors und eine Zustandsänderungsinformation der Verkehrssignalanlage aus empfangenen Fahrzeug-zu-X-Daten herangezogen werden. Diese Informationen sind vergleichsweise einfach erfassbar und bieten somit vorteilhaft die Möglichkeit, die Zeitabweichung zu bestimmen. In diesem Fall ist das erste Fahrzeug-zu-X-Kommunikationssystem einer Verkehrssignalanlage zugeordnet.

Zweckmäßigerweise ist es vorgesehen, dass für das Abgleichen eine Positionsinformation aus erfassten Abstandsdaten eines Abstandssensors und eine Positionsinformation aus empfangenen Fahrzeug-zu-X-Daten herangezogen werden. Da viele Fahrzeuge serienmäßig bereits über Abstandsensoren verfügen, kann ohne zusätzlichen Kosten- und Herstellungsaufwand die Positionsinformation aus erfassten Abstandsdaten bestimmt werden und mit der Positionsinformation aus den empfangenen Fahrzeug-zu-X-Daten abgeglichen werden. Dazu muss in der Regel noch die relative Positionsinformation aus den Abstandsdaten des Abstandssensors in eine absolute Position, wie typischerweise in den Fahrzeug-zu-X-Daten enthalten, umgerechnet werden oder umgekehrt. Die Positionsinformationen sind außerdem vergleichsweise einfach bestimmbar.

Bevorzugt ist es vorgesehen, dass dem Abgleichen eine Vielzahl von mittels eines oder mehrerer statistischer Mittelungsverfahren gemittelter Umfeldsensordatensätze zugrunde gelegt wird. Dadurch steigt die Zuverlässigkeit und Genauigkeit des erfindungsgemäßen Ausgleichens der Zeitabweichung, da Messfehler bzw. sog. Datenausreißer im Mittel neutralisiert werden.

Außerdem ist es vorteilhaft, dass der Korrekturwert einem Datenfusionsprozess entnommen wird, wobei mittels des Datenfusionsprozesses Umfeldsensordaten und Fahrzeug-zu-X-Daten fusioniert werden. Bei einem derartigen an sich bekannten Datenfusionsprozess ist eine Anpassung unterschiedlicher Zeitbasen ohnehin eine notwendige Voraussetzung für die Datenfusion. Diese Datenfusionsprozesse dienen dabei oftmals der Verbesserung einer Positionsbestimmung und nutzen unterschiedliche Filterverfahren, wie z.B. einen Kalmanfilter. Da bei einem derartigen Datenfusionsprozess also ohnehin Zeitabweichungen ausgeglichen werden müssen, können die erkannten Zeitabweichungen im Wesentlichen ohne zusätzlichen Rechenaufwand vorteilhafterweise für das erfindungsgemäße verfahren herangezogen werden.

Weiterhin ist es vorgesehen, dass der Korrekturwert für jedes erste und jedes zweite Fahrzeug-zu-X-Kommunikationssystem individuell bestimmt wird. Da jedes Fahrzeug-zu-X-Kommunikationssystem eine individuelle interne Zeitbasis bestimmt, ist auch eine individuelle Bestimmung des Korrekturwerts zum Ausgleichen der individuellen Zeitabweichungen notwendig. Vorteilhafterweise wird eine Vielzahl an individuellen Korrekturwerten in jedem ersten Fahrzeug-zu-X-Kommunikationssystem für eine bestimmte Zeit gespeichert.

Die vorliegende Erfindung betrifft weiterhin ein System zum Ausgleichen einer Zeitabweichung, welches einen externen Zeitgeber und mindestens einen ersten und einen zweiten Kommunikationsteilnehmer umfasst, wobei der erste Kommunikationsteilnehmer ein erstes Fahrzeug-zu-X-Kommunikationssystem mit einem ersten internen Zeitgeber umfasst und der zweite Kommunikationsteilnehmer ein zweites Fahrzeug-zu-X-Kommunikationssystem mit einem zweiten internen Zeitgeber und Umfeldsensorik und elektronische Abgleichmittel umfasst. Das erste und das zweite Fahrzeug-zu-X-Kommunikationssystem greifen auf eine externe Zeitbasis des externen Zeitgebers zurück, wobei das erste Fahrzeug-zu-X-Kommunikationssystem mittels des ersten internen Zeitgebers eine erste interne Zeitbasis bestimmt und das zweite Fahrzeug-zu-X-Kommunikationssystem mittels des zweiten internen Zeitgebers eine zweite interne Zeitbasis bestimmt. Weiterhin sendet das erste Fahrzeug-zu-X-Kommunikationssystem Fahrzeug-zu-X-Daten und das zweite Fahrzeug-zu-X-Kommunikationssystem empfängt Fahrzeug-zu-X-Daten, wobei der erste interne Zeitgeber zu sendende Fahrzeug-zu-X-Daten mit einem aus der ersten internen Zeitbasis erstellten Zeitstempel kennzeichnet und wobei der zweite interne Zeitgeber erfasste Umfeldsensordaten mit einem aus der zweiten internen Zeitbasis erstellten zweiten Zeitstempel kennzeichnet. Das erfindungsgemäße System zeichnet sich dadurch aus, dass die elektronischen Abgleichmittel mittels eines zeitlichen Abgleichens von erfassten Umfeldsensordaten mit empfangenen Fahrzeug-zu-X-Daten die zeitliche Abweichung des ersten Zeitgebers vom zweiten Zeitgeber bestimmen und mittels eines Korrekturwerts ausgleichen. Da das erfindungsgemäße System somit alle zur Ausführung des erfindungsgemäßen Verfahrens notwendigen Mittel und Vorrichtungen umfasst, ergeben sich die bereits beschriebenen Vorteile.

Bevorzugt ist es vorgesehen, dass die Umfeldsensorik ein oder mehrere Elemente aus der Gruppe
- Radarsensor,
- optischer Kamerasensor,
- Lidarsensor,
- Lasersensor und
- Ultraschallsensor sind. Die genannten Elemente sind dazu geeignet, Umfeldsensordaten zu erfassen, welche mit den empfangen Fahrzeug-zu-X-Daten abgeglichen werden können. Somit können sie vorteilhaft für das erfindungsgemäße System bzw. Verfahren herangezogen werden.

Außerdem ist es vorteilhaft, dass die Fahrzeug-zu-X-Kommunikationsmittel auf Basis einer oder mehrerer Verbindungsklassen aus der Gruppe
- WLAN-Verbindung, insbesondere nach IEEE 802.11,
- ISM-Verbindung (Industrial, Scientific, Medical Band),
- Bluetooth^{®}-Verbindung,
- ZigBee-Verbindung,
- UWB-Verbindung (Ultra Wide Band),
- WiMax^{®}-Verbindung (Worldwide Interoperability for Microwave Access),
- Infrarotverbindung,
- Mobilfunkverbindung und
- radarbasierter Kommunikation Fahrzeug-zu-X-Daten senden und/oder empfangen. Die genannten Verbindungsarten bieten unterschiedliche Vorteile, je nach Art, Wellenlänge und verwendetem Datenprotokoll. So ermöglichen einige der genannten Verbindungsarten z.B. eine vergleichsweise hohe Datenübertragungsrate und einen vergleichsweise schnellen Verbindungsaufbau, andere hingegen eignen sich weitestgehend gut zur Datenübertragung um Sichthindernisse herum. Durch die Kombination und gleichzeitige bzw. parallele Nutzung mehrerer dieser Verbindungsarten ergeben sich weitere Vorteile, da so auch Nachteile einzelner Verbindungsarten ausgeglichen werden können.

Ein weiterer Aspekt der Erfindung betrifft einen zweiten Kommunikationsteilnehmer, der über ein Fahrzeug-zu-X-Kommunikationssystem von einem ersten Kommunikationsteilnehmer mit einem ersten Fahrzeug-zu-X-Kommunikationssystem Fahrzeug-zu-X-Daten empfängt, die durch einen vom einem ersten internen Zeitgeber mit einem aus der ersten internen Zeitbasis erstellten Zeitstempel gekennzeichnet sind, umfassend
- das Fahrzeug-zu-X-Kommunikationssystem, das ausgebildet ist, um auf eine externe Zeitbasis eines externen Zeitgebers zurückzugreifen, mit
- einem zweiten internen Zeitgeber (114, 116) zum Bestimmen einer zweiten internen Zeitbasis,
- einer Umfeldsensorik zum Erfassen von Umfeldsensordaten, die mit einem aus der zweiten internen Zeitbasis erstellten zweiten Zeitstempel gekennzeichnet sind,
wobei elektronische Abgleichmittel derart ausgebildet sind, dass sie mittels eines zeitlichen Abgleichens von erfassten Umfeldsensordaten mit empfangenen Fahrzeug-zu-X-Daten die zeitliche Abweichung des ersten Zeitgebers vom zweiten Zeitgeber bestimmen und mittels eines Korrekturwerts ausgleichen.

Bevorzugt ist es vorgesehen, dass das System das erfindungsgemäße Verfahren ausführt.

Die Erfindung betrifft weiterhin eine Verwendung des erfindungsgemäßen Systems in einem Fahrzeug, insbesondere in einem Kraftfahrzeug.

Weitere bevorzugte Ausführungsformen ergeben sich aus den Unteransprüchen und der nachfolgenden Beschreibung eines Ausführungsbeispiels an Hand von Figuren.

Es zeigt
Fig. 1 eine mögliche Ausführungsform des erfindungsgemäßen Verfahrens zum Ausgleichen einer Zeitabweichung,
Fig. 2 einen beispielhaften Ablauf des erfindungsgemäßen Verfahrens in Form eines Flussdiagramms und
Fig. 3 ein Fahrzeug, welches eine

Zustandsänderungsinformation einer Verkehrssignalanlage aus erfassten Bilddaten und aus empfangenen Fahrzeug-zu-X-Daten für ein zeitliches Abgleichen heranzieht.

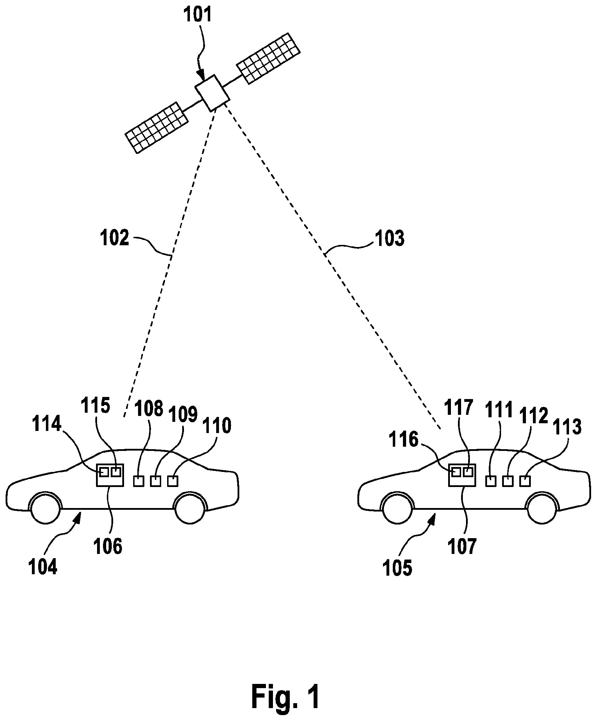

Fig. 1 zeigt GPS-Satelliten 101, welcher beispielsgemäß als externer Zeitgeber verwendet wird und identische GPS-Signale 102 und 103 an Kommunikationsteilnehmer 104 und 105 sendet. Kommunikationsteilnehmer 104 und 105 sind beispielsgemäß Kraftfahrzeuge, wobei Kommunikationsteilnehmer 104 erstes Fahrzeug-zu-X-Kommunikationssystem 106 umfasst und Kommunikationsteilnehmer 105 zweites Fahrzeug-zu-X-Kommunikationssystem 107 umfasst. Kommunikationsteilnehmer 104 umfasst weiterhin Umfeldsensorik 108, 109 und 110 in Form von Monokamerasensor 108, Ultraschallsensor 109 und Radarsensor 110 und Kommunikationsteilnehmer 15 umfasst Umfeldsensorik 111, 112 und 113 in Form von Radarsensor 111, Lidarsensor 112 und Stereokamerasensor 113. Erstes Fahrzeug-zu-X-Kommunikationssystem 16 umfasst seinerseits ersten internen Zeitgeber 114 und elektronische Abgleichmittel 115, während zweites Fahrzeug-zu-X-Kommunikationssystem 107 seinerseits zweiten internen Zeitgeber 116 und elektronische Abgleichmittel 117 umfasst. Erster interner Zeitgeber 114 und zweiter interner Zeitgeber 116 sind als GPS-Module ausgeführt und empfangen GPS-Signale 102 und 103. Aus GPS-Signal 102 bestimmt erster interner Zeitgeber 114 eine erste interne Zeitbasis und aus GPS-Signal 103 bestimmt zweiter interner Zeitgeber 116 eine zweite interne Zeitbasis. Aufgrund des unterschiedlichen Hardwareaufbaus und der unterschiedlichen Datenverarbeitungsstruktur von GPS-Modulen 114 und 116 weicht die erste interne Zeitbasis von der zweiten internen Zeitbasis ab, obwohl GPS-Signale 102 und 103 identische Zeitinformationen umfassen. Mittels Radarsensor 111 erfasst Fahrzeug 105 Abstandsdaten, welche den Abstand von Fahrzeug 105 zu Fahrzeug 104 beschreiben. Diese Abstanddaten werden mittels eines aus der zweiten internen Zeitbasis erstellten zweiten Zeitstempels gekennzeichnet. Aus der mittels GPS-Modul 116 bekannten Eigenposition von Fahrzeug 105 wird nun eine absolute Positionsinformation von Fahrzeug 104 errechnet. Gleichzeitig werden von erstem Fahrzeug-zu-X-Kommunikationssystem 106 in Fahrzeug 104 Fahrzeug-zu-X-Daten versendet, welche unter anderem eine absolute Positionsinformation von Fahrzeug 104 umfassen. Die von erstem Fahrzeug-zu-X-Kommunikationssystem 106 gesendeten Fahrzeug-zu-X-Daten sind außerdem durch einen ersten Zeitstempel gekennzeichnet, der auf Basis der ersten internen Zeitbasis erstellt wurde. Die die Positionsinformation umfassenden Fahrzeug-zu-X-Daten werden von zweitem Fahrzeug-zu-X-Kommunikationssystem 107 in Fahrzeug 105 empfangen. Elektronische Abgleichmittel 117 gleichen nun die von den Fahrzeug-zu-X-Daten umfasste Positionsinformation mit der mittels Radarsensor 111 bestimmten Positionsinformation zeitlich ab, d.h. es wird eine Positionsinformation in den Fahrzeug-zu-X-Daten gesucht, die mit einer Positionsinformation in den Abstandsdaten von Radarsensor 111 übereinstimmt und der die Fahrzeug-zu-X-Daten kennzeichnende erste Zeitstempel wird mit dem die Abstandsdaten kennzeichnenden zweiten Zeitstempel verglichen. Daraus bestimmen zweite elektronische Abgleichmittel 117 eine Zeitabweichung des ersten Zeitstempels vom zweiten Zeitstempel und gleichen diese mittels eines der Zeitabweichung entsprechenden Korrekturwerts aus. Beispielsgemäß beträgt die Zeitabweichung 250 ms, da die erste interne Zeitbasis der zweiten internen Zeitbasis 250 ms vorauseilt. Der Korrekturwert beträgt entsprechend ebenfalls 250 ms und wird von zweiten elektronischen Abgleichmitteln 117 vom ersten Zeitstempel subtrahiert, um die erkannte Zeitabweichung auszugleichen.

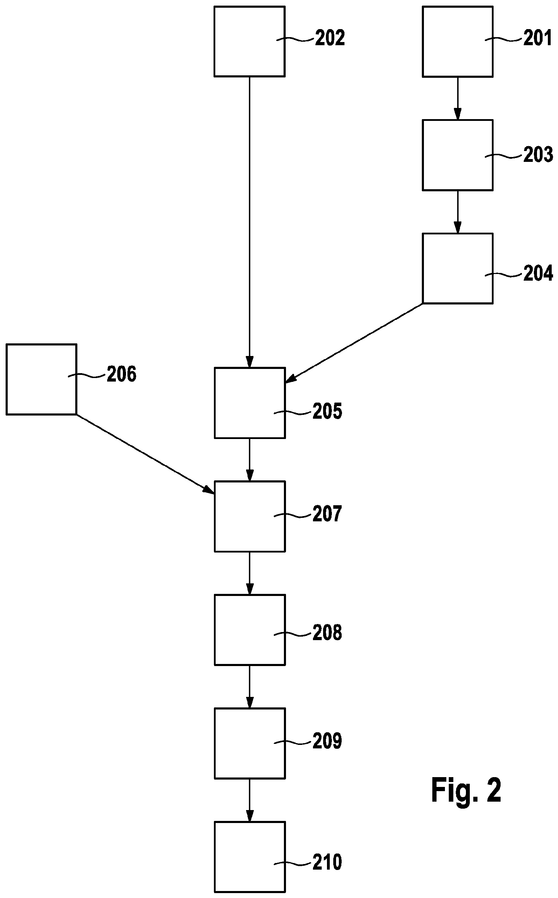

In Fig. 2 ist eine mögliche Ausführungsform des erfindungsgemäßen Verfahrens in Form eines Flussdiagramms dargestellt. In Verfahrensschritt 201 wird von einem zweiten Fahrzeug-zu-X-Kommunikationssystem aus einer externen Zeitbasis eine zweite interne Zeitbasis bestimmt. Gleichzeitig wird in Schritt 202 von einem ersten Fahrzeug-zu-X-Kommunikationssystem aus der externen Zeitbasis eine erste interne Zeitbasis bestimmt. In Schritt 203 werden im ersten Fahrzeug-zu-X-Kommunikationssystem die zu sendenden Fahrzeug-zu-X-Daten mit einem aus der ersten internen Zeitbasis erstellten Zeitstempel gekennzeichnet. Im folgenden Schritt 204 werden die zu sendenden Fahrzeug-zu-X-Daten vom ersten Fahrzeug-zu-X-Kommunikationssystem gesendet und in Schritt 205 vom zweiten Fahrzeug-zu-X-Kommunikationssystem empfangen. Außerdem werden in Schritt 206 Umfeldsensordaten erfasst und mit einem zweiten Zeitstempel aus der zweiten internen Zeitbasis gekennzeichnet. In Verfahrensschritt 207 werden nun die erfassten Umfeldsensordaten mit den empfangenen Fahrzeug-zu-X-Daten zeitlich abgeglichen, d.h., es werden in den Umfeldsensordaten und den Fahrzeug-zu-X-Daten übereinstimmende Informationen gesucht, um in Schritt 208 die Zeitabweichung des die Umfeldsensordaten kenzeichnenden zweiten Zeitstempels von dem die Fahrzeug-zu-X-Daten kennzeichnenden ersten Zeitstempel festzustellen. Anhand der bestimmten Zeitabweichung wird nun in Verfahrensschritt 209 ein Korrekturwert erstellt, welcher der bestimmten Zeitabweichung entspricht. In Schritt 210 wird nun die Zeitabweichung der ersten internen Zeitbasis von der zweiten internen Zeitbasis mittels des Korrekturwerts ausgeglichen.

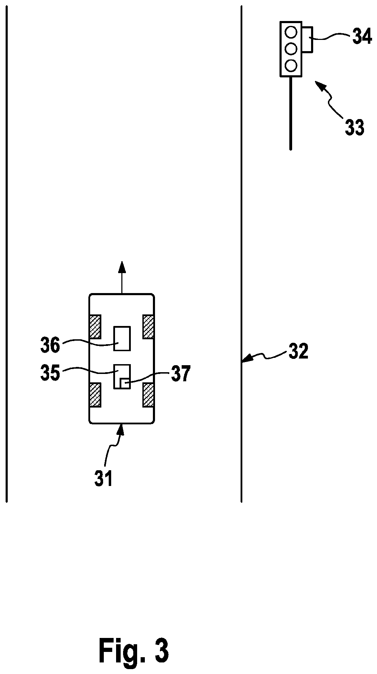

Fig. 3 zeigt Fahrzeug 31, welches sich auf Straße 32 Verkehrssignalanlage 33 nähert. Verkehrssignalanlage 33 ist mit erstem Fahrzeug-zu-X-Kommunikationssystem 34 ausgestattet und Fahrzeug 31 mit zweitem Fahrzeug-zu-X-Kommunikationssystem 35, welches elektronische Abgleichmittel 37 umfasst. Außerdem ist Fahrzeug 31 mit Kamerasensor 36 ausgestattet, welcher Bilddaten von Verkehrssignalanlage 33 erfasst. Verkehrssignalanlage 33 sendet über erstes Fahrzeug-zu-X-Kommunikationssystem 34 eine Zustandsänderungsinformation umfassende Fahrzeug-zu-X-Daten, welche mit einem aus der ersten internen Zeitbasis von erstem Fahrzeug-zu-X-Kommunikationssystem 34 erstellten ersten Zeitstempel gekennzeichnet sind. Die Zustandsänderungsinformation beschreibt, dass eine Zustandsänderung von Verkehrssignalanlage 33, d.h. ein Umschalten von Rotlicht auf Gelblicht, ausgehend vom ersten Zeitstempel in 5 s erfolgen wird. Kamerasensor 36 erfasst die Zustandsänderung beschreibende Bilddaten, welche mit einem aus der zweiten internen Zeitbasis erstellten Zeitstempel gekennzeichnet werden, 4,5 s nach Empfang der Fahrzeug-zu-X-Daten. Elektronische Abgleichmittel 37 ziehen nun die Zustandsänderungsinformation aus den erfassten Bilddaten und die Zustandsänderungsinformation aus den empfangenen Fahrzeug-zu-X-Daten heran, um mittels des ersten und des zweiten Zeitstempels die Zeitabweichung und einen der Zeitabweichung entsprechenden Korrekturwert zu bestimmen.

## Patentansprüche

1. Verfahren zum Ausgleichen einer Zeitabweichung,
- bei welchem ein erstes und ein zweites Fahrzeug-zu-X-Kommunikationssystem (106, 107, 34, 35) auf eine externe Zeitbasis zurückgreifen,
- wobei das erste Fahrzeug-zu-X-Kommunikationssystem (106, 107, 34, 35) aus der externen Zeitbasis eine erste interne Zeitbasis bestimmt und das zweite Fahrzeug-zu-X-Kommunikationssystem (106, 107, 34, 35) aus der externen Zeitbasis eine zweite interne Zeitbasis bestimmt,
- wobei das erste Fahrzeug-zu-X-Kommunikationssystem (106, 107, 34, 35) Fahrzeug-zu-X-Daten sendet und das zweite Fahrzeug-zu-X-Kommunikationssystem (106, 107, 34, 35) Fahrzeug-zu-X-Daten empfängt,
- wobei zu sendende Fahrzeug-zu-X-Daten mit einem aus der ersten internen Zeitbasis erstellten ersten Zeitstempel gekennzeichnet werden und
- wobei erfasste Umfeldsensordaten mit einem aus der zweiten internen Zeitbasis erstellten zweiten Zeitstempel gekennzeichnet werden,
**dadurch gekennzeichnet,**
**dass** mittels zeitlichen Abgleichens der erfassten Umfeldsensordaten mit den empfangenen Fahrzeug-zu-X-Daten die Zeitabweichung der ersten internen Zeitbasis von der zweiten internen Zeitbasis bestimmt wird und mittels eines Korrekturwerts ausgeglichen wird.

2. Verfahren nach Anspruch 1,
**dadurch gekennzeichnet,**
**dass** das erste und das zweite Fahrzeug-zu-X-Kommunikationssystem (106, 107, 34, 35) auf eine Zeitbasis eines globalen Navigationssattelitensystems (101) als externe Zeitbasis zurückgreifen.

3. Verfahren nach mindestens einem der Ansprüche 1 oder 2, **dadurch gekennzeichnet,**
**dass** für das Abgleichen eine mittels zeitlicher Interpolation und/oder Extrapolation der Umfeldsensordaten erstellte erste Datenkurve und/oder eine mittels zeitlicher Interpolation und/oder Extrapolation der empfangenen Fahrzeug-zu-X-Daten erstellte zweite Datenkurve herangezogen werden.

4. Verfahren nach mindestens einem der Ansprüche 1 bis 3, **dadurch gekennzeichnet,**
**dass** für das Abgleichen eine Geschwindigkeitsinformation aus erfassten Dopplereffektdaten eines Radarsensors und eine Geschwindigkeitsinformation aus empfangenen Fahrzeug-zu-X-Daten herangezogen werden.

5. Verfahren nach mindestens einem der Ansprüche 1 bis 4, **dadurch gekennzeichnet,**
**dass** für das Abgleichen eine Zustandsänderungsinformation einer Verkehrssignalanlage (33) aus erfassten Bilddaten eines Kamerasensors (108, 113, 36) und eine Zustandsänderungsinformation der Verkehrssignalanlage (33) aus empfangenen Fahrzeug-zu-X-Daten herangezogen werden.

6. Verfahren nach mindestens einem der Ansprüche 1 bis 5, **dadurch gekennzeichnet,**
**dass** für das Abgleichen eine Positionsinformation aus erfassten Abstandsdaten eines Abstandssensors (109, 110, 111, 112, 113, 36) und eine Positionsinformation aus empfangenen Fahrzeug-zu-X-Daten herangezogen werden.

7. Verfahren nach mindestens einem der Ansprüche 1 bis 6, **dadurch gekennzeichnet,**
**dass** dem Abgleichen eine Vielzahl von mittels eines oder mehrerer statistischer Mittelungsverfahren gemittelter Umfeldsensordatensätze zugrunde gelegt wird.

8. Verfahren nach mindestens einem der Ansprüche 1 bis 7, **dadurch gekennzeichnet,**
**dass** der Korrekturwert einem Datenfusionsprozess entnommen wird, wobei mittels des Datenfusionsprozesses Umfeldsensordaten und Fahrzeug-zu-X-Daten fusioniert werden.

9. Verfahren nach mindestens einem der Ansprüche 1 bis 8, **dadurch gekennzeichnet,**
**dass** der Korrekturwert für jedes erste und jedes zweite Fahrzeug-zu-X-Kommunikationssystem individuell bestimmt wird.

10. System zum Ausgleichen einer Zeitabweichung, insbesondere gemäß einem Verfahren nach einem der Ansprüche 1 bis 9, umfassend
a) einen externen Zeitgeber (101),
b) einen ersten Kommunikationsteilnehmer (104, 105), der ein erstes Fahrzeug-zu-X-Kommunikationssystem (106, 107, 34, 35) mit
einem ersten internen Zeitgeber (114, 116) umfasst, wobei das erste Fahrzeug-zu-X-Kommunikationssystem (106, 107, 34, 35) zum Zurückgreifen auf eine externe Zeitbasis des externen Zeitgebers und zum Bestimmen einer ersten Zeitbasis aus der externen Zeitbasis mittels des ersten internen Zeitgebers (114, 116) ausgebildet ist, und
wobei das erste Fahrzeug-zu-X-Kommunikationssystem (106, 107, 34, 35) ausgebildet ist, um Fahrzeug-zu-X-Daten zu senden, die vom ersten internen Zeitgeber (114, 116) mit einem aus der ersten internen Zeitbasis erstellten Zeitstempel gekennzeichnet sind, und
c) einen zweiten Kommunikationsteilnehmer (104, 105), der ein zweites Fahrzeug-zu-X-Kommunikationssystem (106, 107, 34, 35),
das einen zweiten internen Zeitgeber (114, 116) und elektronische Abgleichmittel (115, 117) umfasst, wobei
das zweite Fahrzeug-zu-X-Kommunikationssystem (106, 107, 34, 35) zum Zurückgreifen auf die externe Zeitbasis des externen Zeitgebers und zum Bestimmen einer zweiten Zeitbasis aus der externen Zeitbasis mittels des zweiten internen Zeitgebers (114, 116)ausgebildet ist, und
wobei das zweite Fahrzeug-zu-X-Kommunikationssystem (106, 107, 34, 35) ausgebildet ist, um Fahrzeug-zu-X-Daten zu empfangen, und
das eine Umfeldsensorik (108, 109, 110, 111, 112, 113, 36) zum erfassen von Umfeldsensordaten umfasst, die mittels des zweiten internen Zeitgebers mit einem aus der zweiten internen Zeitbasis erstellten zweiten Zeitstempel **gekennzeichnet sind,**
**dadurch gekennzeichnet,**
dass die elektronischen Abgleichmittel (115, 117, 37) derart ausgebildet sind, dass sie mittels eines zeitlichen Abgleichens von erfassten Umfeldsensordaten mit empfangenen Fahrzeug-zu-X-Daten die zeitliche Abweichung des ersten Zeitgebers (114, 116) vom zweiten Zeitgeber (114, 116) bestimmen und mittels eines Korrekturwerts ausgleichen.

11. System nach Anspruch 10,
**dadurch gekennzeichnet,**
**dass** die Umfeldsensorik (108, 109, 110, 111, 112, 113, 36) ein oder mehrere Elemente aus der Gruppe
- Radarsensor (110, 111),
- optischer Kamerasensor (108, 113),
- Lidarsensor (112),
- Lasersensor und
- Ultraschallsensor (109)
sind.

12. System nach mindestens einem der Ansprüche 10 und 11, **dadurch gekennzeichnet,**
**dass** die Fahrzeug-zu-X-Kommunikationsmittel auf Basis einer oder mehrerer Verbindungsklassen aus der Gruppe
- WLAN-Verbindung, insbesondere nach IEEE 802.11,
- ISM-Verbindung (Industrial, Scientific, Medical Band),
- Bluetooth^{®}-Verbindung,
- ZigBee-Verbindung,
- UWB-Verbindung (Ultra Wide Band),
- WiMax^{®}-Verbindung (Worldwide Interoperability for Microwave Access),
- Infrarotverbindung,
- Mobilfunkverbindung und
- radarbasierter Kommunikation Fahrzeug-zu-X-Daten senden und/oder empfangen.

13. Zweiter Kommunikationsteilnehmer (105), der ausgestaltet ist, über ein Fahrzeug-zu-X-Kommunikationssystem (107, 35) von einem ersten Kommunikationsteilnehmer (104) mit einem ersten Fahrzeug-zu-X-Kommunikationssystem (106, 34) Fahrzeug-zu-X-Daten zu empfangen,
- wobei das erste Fahrzeug-zu-X-Kommunikationssystem (106, 35) zum Zurückgreifen auf eine externe Zeitbasis eines externen Zeitgebers und mittels eines ersten internen Zeitgebers (114) zum Bestimmen einer ersten internen Zeitbasis aus der externen Zeitbasis ausgestaltet ist,
- wobei die Fahrzeug-zu-X-Daten durch einen von dem ersten internen Zeitgeber (114) mit einem aus der ersten internen Zeitbasis erstellten Zeitstempel gekennzeichnet sind, umfassend
- das Fahrzeug-zu-X-Kommunikationssystem (107, 35), das ausgebildet ist, um auf die externe Zeitbasis des externen Zeitgebers zurückzugreifen, mit
- einem zweiten internen Zeitgeber (116) zum Bestimmen einer zweiten internen Zeitbasis aus der externen Zeitbasis,
- einer Umfeldsensorik (111, 112, 113, 36) zum Erfassen von Umfeldsensordaten, die mit einem aus der zweiten internen Zeitbasis erstellten zweiten Zeitstempel gekennzeichnet sind,
**gekennzeichnet durch**
elektronische Abgleichmittel (117), die ausgebildet sind, mittels eines zeitlichen Abgleichens von erfassten Umfeldsensordaten mit empfangenen Fahrzeug-zu-X-Daten die zeitliche Abweichung des ersten Zeitgebers (114) vom zweiten Zeitgeber (116) zu bestimmen und mittels eines Korrekturwerts ausgleichen.

## Claims

1. A method for compensating for a time discrepancy,
- in which a first and a second vehicle-to-X communication system (106, 107, 34, 35) resort to an external time base,
- wherein the first vehicle-to-X communication system (106, 107, 34, 35) determines a first internal time base from the external time base and the second vehicle-to-X communication system (106, 107, 34, 35) determines a second internal time base from the external time base,
- wherein the first vehicle-to-X communication system (106, 107, 34, 35) sends vehicle-to-X data and the second vehicle-to-X communication system (106, 107, 34, 35) receives vehicle-to-X data,
- wherein vehicle-to-X data to be sent are identified using a first time stamp created from the first internal time base, and
- wherein captured ambient sensor data are identified using a second time stamp created from the second internal time base,
**characterized in that**
temporal consistency checking between the captured ambient sensor data and the received vehicle-to-X data is used to determine the time discrepancy between the first internal time base and the second internal time base and to compensate for said time discrepancy using a correction value.

2. The method according to Claim 1,
**characterized in that**
the first and second vehicle-to-X communication systems (106, 107, 34, 35) resort to a time base of a global navigation satellite system (101) as the external time base.

3. The method according to at least one of Claims 1 or 2, **characterized in that**
the consistency checking involves the use of a first data curve created by temporal interpolation and/or extrapolation of the ambient sensor data and/or a second data curve created by temporal interpolation and/or extrapolation of the received vehicle-to-X data.

4. The method according to at least one of Claims 1 to 3, **characterized in that**
the consistency checking involves the use of a piece of speed information from captured Doppler effect data from a radar sensor and a piece of speed information from received vehicle-to-X data.

5. The method according to at least one of Claims 1 to 4, **characterized in that**
the consistency checking involves the use of a piece of state change information for a traffic signal installation (33) from captured image data from a camera sensor (108, 113, 36) and a piece of state change information for the traffic signal installation (33) from received vehicle-to-X data.

6. The method according to at least one of Claims 1 to 5, **characterized in that**
the consistency checking involves the use of a piece of position information from captured distance data from a distance sensor (109, 110, 111, 112, 113, 36) and a piece of position information from received vehicle-to-X data.

7. The method according to at least one of Claims 1 to 6, **characterized in that**
the consistency checking is based on a multiplicity of ambient sensor data records averaged using one or more statistical averaging methods.

8. The method according to at least one of Claims 1 to 7, **characterized in that**
the correction value is taken from a data fusion process, wherein the data fusion process is used to fuse ambient sensor data and vehicle-to-X data.

9. The method according to at least one of Claims 1 to 8, **characterized in that**
the correction value is determined for each first and each second vehicle-to-X communication system individually.

10. A system for compensating for a time discrepancy, in particular in accordance with a method according to any one of Claims 1 to 9, comprising
a) an external timer (101),
b) a first communication subscriber (104, 105) which comprises a first vehicle-to-X communication system (106, 107, 34, 35) having
a first internal timer (114, 116), wherein the first vehicle-to-X communication system (106, 107, 34, 35) is configured to resort to an external time base of the external timer and to use the first internal timer (114, 116) to determine a first time base from the external time base, and
wherein the first vehicle-to-X communication system (106, 107, 34, 35) is configured to send vehicle-to-X data which are identified by the first internal timer (114, 116) with a time stamp created from the first internal time base, and
c) a second communication subscriber (104, 105) which comprises a second vehicle-to-X communication system (106, 107, 34, 35)
having a second internal timer (114, 116) and electronic consistency checking means (115, 117), wherein
the second vehicle-to-X communication system (106, 107, 34, 35) is configured to resort to the external time base of the external timer and to use the second internal timer (114, 116) to determine a second time base from the external time base, and
wherein the second vehicle-to-X communication system (106, 107, 34, 35) is configured to receive vehicle-to-X data, and which comprises ambient sensors (108, 109, 110, 111, 112, 113, 36) to capture ambient sensor data, which are identified by means of the second internal timer with a second time stamp created from the second internal time base,
**characterized in that**
the electronic consistency checking means (115, 117, 37) are configured to use temporal consistency checking between captured ambient sensor data and received vehicle-to-X data to determine the time discrepancy between the first timer (114, 116) and the second timer (114, 116) and to compensate for said time discrepancy using a correction value.

11. The system according to Claim 10,
**characterized in that**
the ambient sensors (108, 109, 110, 111, 112, 113, 36) are one or more elements selected from the group consisting of
- a radar sensor (110, 111),
- an optical camera sensor (108, 113),
- a lidar sensor (112),
- a laser sensor, and
- an ultrasonic sensor (109).

12. The system according to at least one of Claims 10 and 11, **characterized in that**
the vehicle-to-X communication means send and/or receive vehicle-to-X data on the basis of one or more connection classes selected from the group consisting of
- a WLAN connection, in particular in accordance with IEEE 802.11,
- an ISM (Industrial, Scientific, Medical Band) connection,
- a Bluetooth® connection,
- a ZigBee connection,
- a UWB (Ultra Wide Band) connection,
- a WiMax® (Worldwide Interoperability for Microwave Access) connection,
- an infrared connection,
- a mobile radio connection and
- radar-based communication.

13. A second communication subscriber (105) which is configured to receive vehicle-to-X data by means of a vehicle-to-X communication system (107, 35) from a first communication subscriber (104) having a first vehicle-to-X communication system (106, 34),
- wherein the first vehicle-to-X communication system (106, 35) is configured to resort to an external time base of an external timer and to use a first internal timer (114) to determine a first internal time base from the external time base,
- wherein the vehicle-to-X data are identified by the first internal timer (114) with a time stamp created from the first internal time base, comprising
- the vehicle-to-X communication system (107, 35) which is configured to resort to the external time base of the external timer, having
- a second internal timer (116) to determine a second internal time base from the external time base,
- ambient sensors (111, 112, 113, 36) to capture ambient sensor data which are identified using a second time stamp created from the second internal time base,
**characterized by**
electronic consistency checking means (117) which are configured to use temporal consistency checking between captured ambient sensor data and received vehicle-to-X data to determine the time discrepancy between the first timer (114) and the second timer (116) and to compensate for said time discrepancy using a correction value.

## Revendications

1. Procédé destiné à compenser un écart de temps,
- dans lequel un premier et deuxième système de communication véhicule-vers-X (106, 107, 34, 35) recourent à une base de temps externe,
- le premier système de communication véhicule-vers-X (106, 107, 34, 35) définissant une première base de temps interne à partir de la base de temps externe, et le deuxième système de communication véhicule-vers-X (106, 107, 34, 35) définissant une deuxième base de temps interne à partir de la base de temps externe,
- le premier système de communication véhicule-vers-X (106, 107, 34, 35) émettant des données véhicule-vers-X, et le deuxième système de communication véhicule-vers-X (106, 107, 34, 35) recevant des données véhicule-vers-X,
- des données véhicule-vers-X à émettre étant caractérisées avec un premier horodatage établi à partir de la première base de temps interne, et
- des données de capteur d'environnement détectées étant caractérisées avec un deuxième horodatage établi à partir de la deuxième base de temps interne,
**caractérisé en ce que**,
au moyen de la compensation de temps des données de capteur d'environnement détectées avec les données véhicule-vers-X reçues, l'écart de temps entre la première base de temps interne et la deuxième base de temps interne est défini et est compensé au moyen d'une valeur de correction.

2. Procédé selon la revendication 1,
**caractérisé en ce que**
le premier et le deuxième système de communication véhicule-vers-X (106, 107, 34, 35) recourent à une base de temps d'un système de navigation par satellite global (101) en tant que base de temps externe.

3. Procédé selon au moins l'une des revendications 1 ou 2, **caractérisé en ce que**,
pour la compensation, il est fait appel à une première courbe de données établie au moyen d'une interpolation et/ou extrapolation temporelle des données de capteur d'environnement et/ou à une deuxième courbe de données établie au moyen d'une interpolation et/ou extrapolation temporelle des données véhicule-vers-X reçues.

4. Procédé selon au moins l'une des revendications 1 à 3, **caractérisé en ce que**,
pour la compensation, il est fait appel à une information de vitesse à partir de données par effet Doppler détectées d'un capteur radar et à une information de vitesse à partir de données véhicule-vers-X reçues.

5. Procédé selon au moins l'une des revendications 1 à 4, **caractérisé en ce que**,
pour la compensation, il est fait appel à une information de modification d'état d'un système de signalisation routière (33) à partir de données images détectées d'un capteur de la caméra (108, 113, 36), et à une information de modification d'état du système de signalisation routière (33) à partir de données véhicule-vers-X reçues.

6. Procédé selon au moins l'une des revendications 1 à 5, **caractérisé en ce que**,
pour la compensation, il est fait appel à une information de position à partir de données de distance détectées d'un capteur de distance (109, 110, 111, 112, 113, 36) et à une information de position à partir de données véhicule-vers-X reçues.

7. Procédé selon au moins l'une des revendications 1 à 6, **caractérisé en ce que**
la compensation repose sur une multiplicité de jeux de données de capteur d'environnement dont la moyenne est calculée au moyen d'un ou de plusieurs procédés de calcul de moyenne statistiques.

8. Procédé selon au moins l'une des revendications 1 à 7, **caractérisé en ce que**
la valeur de correction est issue d'un processus de fusion de données, dans lequel des données de capteur d'environnement et des données véhicule-vers-X sont fusionnées au moyen du processus de fusion de données.

9. Procédé selon au moins l'une des revendications 1 à 8, **caractérisé en ce que**
la valeur de correction est définie individuellement pour chaque premier et chaque deuxième système de communication véhicule-vers-X.

10. Système de compensation d'un écart de temps, en particulier suivant un procédé selon l'une des revendications 1 à 9, comprenant
a) un compte-temps externe (101),
b) un premier correspondant de communication (104, 105) qui comprend un premier système de communication véhicule-vers-X (106, 107, 34, 35) avec
un premier compte-temps interne (114, 116), le premier système de communication véhicule-vers-X (106, 107, 34, 35) étant constitué pour recourir à une base de temps externe du compte-temps externe et pour définir une première base de temps à partir de la base de temps externe au moyen du premier compte-temps interne (114, 116), et
le premier système de communication véhicule-vers-X (106, 107, 34, 35) étant constitué pour émettre des données véhicule-vers-X qui sont caractérisées avec un horodatage établi par le premier compte-temps interne (114, 116) à partir de la première base de temps interne, et
c) un deuxième correspondant de communication (104, 105) qui comprend un deuxième système de communication véhicule-vers-X (106, 107, 34, 35),
qui comprend un deuxième compte-temps interne (114, 116) et des moyens de compensation électroniques (115, 117),
le deuxième système de communication véhicule-vers-X (106, 107, 34, 35) étant constitué pour recourir à la base de temps externe du compte-temps externe et pour définir une deuxième base de temps à partir de la base de temps externe au moyen du deuxième compte-temps interne (114, 116), et
le deuxième système de communication véhicule-vers-X (106, 107, 34, 35) étant constitué pour recevoir des données véhicule-vers-X, et
qui comprend des capteurs d'environnement (108, 109, 110, 111, 112, 113, 36) pour la détection de données de capteur d'environnement qui sont caractérisées au moyen du deuxième compte-temps interne avec un deuxième horodatage établi à partir de la deuxième base de temps interne,
**caractérisé en ce que**
les moyens de compensation électroniques (115, 117, 37) sont constitués de telle sorte que, au moyen d'une compensation temporelle de données de capteur d'environnement détectées avec des données véhicule-vers-X reçues, ils définissent l'écart de temps entre le premier compte-temps interne (114, 116) et le deuxième compte-temps interne (114, 116) et le compensent au moyen d'une valeur de correction.

11. Système selon la revendication 10,
**caractérisé en ce que**
les capteurs d'environnement (108, 109, 110, 111, 112, 113, 36) sont un ou plusieurs éléments appartenant au groupe
- capteur de radar (110, 111),
- capteur de caméra optique (108, 113),
- capteur lidar (112),
- capteur laser et
- capteur ultrasonique (109).

12. Système selon au moins l'une des revendications 10 et 11, **caractérisé en ce que**
les moyen de communication véhicule-vers-X émettent et/ou reçoivent des données véhicule-vers-X sur la base d'une ou de plusieurs classes de connexion appartenant au groupe
- connexion WLAN, en particulier selon IEEE 802.11,
- connexion ISM (Industrial, Scientific, Medical Band),
- connexion Bluetooth®,
- connexion ZigBee,
- connexion UWB (Ultra Wide Band),
- connexion WiMax® (Worldwide Interoperability for Microwave Access),
- connexion infrarouge
- connexion de radiocommunication mobile et
- communication basée sur le radar.

13. Deuxième correspondant de communication (105), qui est agencé pour, par le biais d'un système de communication véhicule-vers-X (107, 35), recevoir des données véhicule-vers-X de la part d'un premier correspondant de communication (104) avec un premier système de communication véhicule-vers-X (106, 34),
- le premier système de communication véhicule-vers-X (106, 35) étant agencé pour recourir à une base de temps externe d'un compte-temps externe et pour, au moyen d'un premier compte-temps interne (114), définir une première base de temps interne à partir de la base de temps externe,
- les données véhicule-vers-X étant caractérisées horodatage établi par le premier compte-temps interne (114) à partir de la première base de temps interne, comprenant
- le système de communication véhicule-vers-X (107, 35) qui est constitué pour recourir à la base de temps externe du compte-temps externe, avec
- un deuxième compte-temps interne (116) pour la définition d'une deuxième base de temps interne à partir de la base de temps externe,
- des capteurs d'environnement (111, 112, 113, 36) pour la détection de données de capteur d'environnement qui sont caractérisées avec un deuxième horodatage établi à partir de la deuxième base de temps interne,
**caractérisé par**
des moyens de compensation électroniques (117) qui sont constitués pour, au moyen d'une compensation temporelle de données de capteur d'environnement détectées avec des données véhicule-vers-X reçues, définir l'écart de temps entre le premier compte-temps interne (114) et le deuxième compte-temps (116) et le compenser au moyen d'une valeur de correction.
